# FASCICULE DE BREVET EUROPEEN

(11) **EP 0 570 290 B1**
(45) Date de publication et mention de la délivrance du brevet: **06.08.1997**
(21) Numéro de dépôt: 93401228.7
(22) Date de dépôt: 13.05.1993
(51) Int. Cl.: B60Q 1/04, F16B 35/06

(54) **Elément de montage d'un dispositif d'éclairage ou de signalisation sur un véhicule automobile**
Einbauelement für Beleuchtungs- oder Signaleinrichtung eines Kraftfahrzeugs
Mounting element for lighting or signaling device of an automotive vehicle

(30) Priorité: 14.05.1992 FR 9205859
(43) Date de publication de la demande: 18.11.1993
(73) Titulaire: VALEO VISION, 93000 Bobigny (FR)
(72) Inventeur: Rives, Claude, F-27930 Evreux (FR)
(74) Mandataire: Martin, Jean-Jacques

(56) Documents cités:
- EP-A- 0 399 756
- FR-A- 2 193 367
- FR-A- 2 622 649
- GB-A- 2 249 165
- US-A- 3 897 713

## Description

La présente invention a trait d'une façon générale à la fixation de dispositifs d'éclairage ou de signalisation sur des carrosseries ou analogues de véhicules automobiles.

De façon classique, la fixation du socle d'un bloc de feux de signalisation, ou plus généralement de tout dispositif d'éclairage ou de signalisation, sur une carrosserie peut s'effectuer par des tiges filetées reliées au socle et passant par des trous de la carrosserie, des écrous étant engagés sur les tiges filetées pour assurer la fixation.

Le document FR-A-2 598 201 décrit une fixation de ce type.

La pièce définissant la tige filetée est généralement rendue solidaire du socle par surmoulage du socle sur une partie de la pièce distincte de la tige filetée proprement dite, ce qui peut s'avérer désavantageux sur le plan du coût de revient.

En outre, la mise en place de l'écrou sur l'extrémité libre de la tige filetée pour assurer la fixation doit nécessairement être effectuée manuellement, ce qui limite considérablement l'automatisation du montage des blocs de feux ou de projecteurs.

On connaît également par US-A-3 897 713 un élément de montage selon le préambule de la revendication 1.

la partie intermédiaire déformable de cet élément connu est destinée uniquement à éviter le coulage d'un adhésif logé dans le trou abritant le filetage complémentaire formé dans le dispositif à monter.

La présente invention a pour objet d'améliorer cet élément de montage connu, et vise en particulier à lui permettre d'assurer une étanchéité entre les deux côtés de la paroi dans laquelle est formé le trou traversant.

L'invention propose à ces effet un élément de montage ayant les particularités de la revendication 1.

Des aspects préférés, mais non limitatifs, de cet élément sont exposés dans les sous-revendications 2 et 3.

En outre, dans les éléments connus du type mentionné plus haut, la mise en place de l'écrou sur la tige filetée implique un parfait alignement entre ledit écrou et l'empreinte mâle terminale qui doit traverser ledit écrou.

La présente invention a pour objet additionnel, grâce aux caractéristiques des revendications 4 à 6, de faciliter le montage robotisé de l'écrou sur la tige filetée même si l'alignement n'est pas parfait.

L'invention propose enfin un dispositif d'éclairage ou de signalisation pour véhicule automobile tel que défini dans la revendication 7.

D'autres aspects, buts et avantages de la présente invention apparaîtront mieux à la lecture de la description détaillée suivante d'un mode de réalisation préférée de celle-ci, donnée à titre d'exemple et faite en référence au dessin annexé, sur lequel:
la figure 1 est une vue de dessus et partiellement en coupe d'un élément de montage selon l'invention; et
la figure 2 est une vue en coupe horizontale axiale de l'élément de montage de la figure 1 une fois monté sur un dispositif d'éclairage ou de signalisation et sur une partie de carrosserie ou analogue.

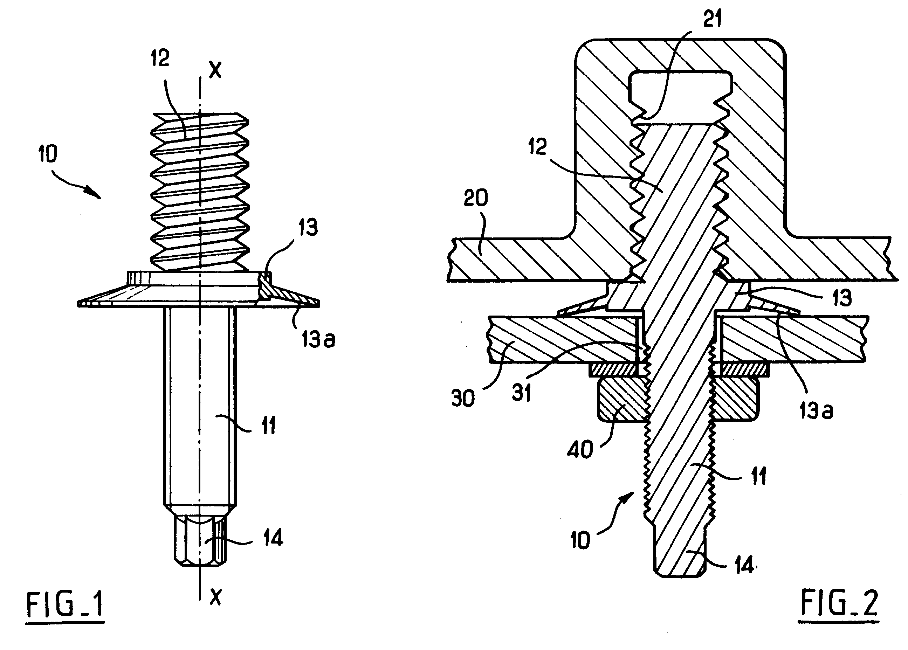

En référence tout d'abord à la figure 1, on a représenté un élément de de montage, globalement désigné par la référence 10, qui comprend une première partie principale constituée par une tige filetée 11 d'axe X-X. Une deuxième partie principale de l'élément est constituée par une autre tige filetée 12, dont au moins le diamètre, le pas ou la taille des filets est différent du diamètre, du pas ou de la taille des filets de la partie filetée 11. Les parties 11 et 12 sont séparées par une partie en forme générale de collerette 13 qui définit une lèvre mince conique circonférentielle 13a, pouvant être déformée, s'évasant en direction de la partie 11.

A l'extrémité libre de la tige filetée 11, opposée à la collerette 13, est prévue une empreinte mâle 14, par exemple du type à six pans concaves. Le diamètre hors-tout de cette empreinte est inférieur au diamètre intérieur hors-tout d'un écrou destiné à être engagé sur la tige filetée 11, de façon à permettre le passage de celui-ci. Mais de façon préférée, ce diamètre hors-tout de l'empreinte 14 est seulement légèrement inférieur au diamètre intérieur hors-tout de l'écrou, de façon à ce que ce dernier puisse être maintenu par l'empreinte 14 dans une relation d'alignement avec la tige filetée 11 avant son vissage.

De façon préférée, les parties 11, 12, 13 et 14 de l'élément 10 sont réalisées d'un seul tenant, en métal ou en matière plastique rigide. En variante, les parties 11, 12 et 14 sont réalisées en métal d'un seul tenant, et la collerette 13 munie de sa lèvre déformable 13a est rapportée sur lesdites parties.

La figure 2 représente l'élément de montage 10 de la figure 1 une fois en place.

La partie filetée 12 est vissée dans un logement taraudé complémentaire 21 formé de façon appropriée dans un socle ou boîtier 20, par exemple en matière plastique, représenté partiellement et faisant partie d'un dispositif d'éclairage ou de signalisation. Ce vissage de la partie filetée 12 dans le logement 21 est réalisé en entraînement l'élément 10 en rotation selon l'axe X-X à l'aide d'un outil (non représenté) pourvu d'une empreinte femelle complémentaire de l'empreinte 14.

Ensuite, le dispositif d'éclairage ou de signalisation équipé de l'élément de montage 10 est positionné de manière à ce que la tige filetée 11 traverse un trou 31 formé dans une partie de carrosserie 30 du véhicule.

Un écrou 40 (avec le cas échéant interposition d'une rondelle) est alors mis en place sur l'empreinte 14, en butée contre l'extrémité du filetage de la tige 11, et est tourné pour être vissé sur ce filetage. Lorsque l'écrou, au cours du vissage, vient en contact avec la face de la carrosserie tournée vers lui, une compression est exercée pour ainsi déformer élastiquement la lèvre 13a et assurer l'étanchéité entre les côtés opposés de la carrosserie.

On observera ici que l'empreinte 14, dont la valeur du diamètre est choisie comme précédemment décrit, permet d'assurer le guidage de l'écrou. Si nécessaire, la face d'extrémité axiale libre de l'empreinte 14 peut être à cet effet bombée ou pointue.

De cette manière, il devient possible d'assurer la mise en place et le vissage de l'écrou à l'aide d'un bras de robot ou analogue.

Lorsque l'axe X-X s'étend horizontalement ou avec une faible inclinaison par rapport à l'horizontale, l'empreinte 14 peut même tenir lieu de support provisoire de l'écrou, après sa mise en place et avant son vissage.

## Revendications

1. Elément (10) de montage d'un dispositif d'éclairage ou de signalisation de véhicule automobilesur sur une paroi fixe (30) du véhicule pourvue d'un trou traversant (31), du type comprenant une première partie (11) définissant une tige filetée apte à être engagée dans le trou et à coopérer avec un écrou (40), et une deuxième partie (12) s'étendant à partir d'une première extrémité de la tige filetée et destinée à la fixation de l'élément sur le dispositif d'éclairage ou de signalisation, ladite deuxième partie (12) comprenant un filetage essentiellement coaxial avec la tige filetée (11) et apte à coopérer avec un filetage complémentaire (21) prévu sur le dispositif, et dans lequel il est prévu sur la deuxième extrémité, libre, de la tige filetée, une empreinte (14) permettant l'entraînement de l'élément en rotation à l'aide d'un outil pour sa fixation à l'aide dudit filetage sur le dispositif, ledit élément comprenant en outre, entre lesdites première et deuxième parties, une partie intermédiaire déformable (13a), caractérisé en ce que ladite partie intermédiaire déformable constitue une lèvre d'étanchéité destinée à s'appliquer de façon étanche contre ladite paroi (30) du côté opposé à l'écrou et assurer une étanchéité entre les deux côtés de la paroi au niveau dudit trou.

2. Elément selon la revendication 1, caractérisé en ce que ladite lèvre est de forme généralement tronconique et s'évase en direction de ladite paroi (30).

3. Elément selon la revendication 2, caractérisé en ce que ladite lèvre présente une épaisseur qui diminue de l'intérieur vers l'extérieur.

4. Elément selon l'une des revendications 1 à 3, caractérisé en ce que ladite empreinte consiste en une empreinte mâle saillante (14) présentant une une dimension hors-tout légèrement inférieure au diamètre intérieur hors-tout de l'écrou (40), et en ce que ladite empreinte (14) présente à son sommet une forme lui permettant de guider l'écrou (40) en vue du positionnement robotisé dudit écrou sur ladite tige filetée (11).

5. Elément selon la revendication 4, caractérisé en ce que le sommet de ladite empreinte (14) est bombé.

6. Elément selon la revendication 4, caractérisé en ce que le sommet de ladite empreinte (14) est pointu.

7. Dispositif d'éclairage ou de signalisation pour véhicule automobile, du type comprenant une partie (20) formant socle ou boîtier, caractérisé en ce qu'il comprend au moins un élément (10) selon l'une des revendications 1 à 6 monté sur ladite partie formant socle ou boîtier.

## Claims

1. A component (10) for mounting a lighting or signalling device of a motor vehicle onto a fixed wall (30) of the vehicle, provided with a through hole (31), of the type comprising a first portion (11) defining a threaded rod capable of being engaged in the hole and of cooperating with a screw nut (40), and a second portion (12) extending from a first end of the threaded rod and intended for the attachment of the component onto the lighting or signalling device, the said second portion (12) comprising a thread essentially coaxial with the threaded rod (11) and capable of cooperating with a complementary thread (21) provided on the device, and in which there is provided on the second free end of the threaded rod a shape (14) enabling the rotational driving of the component by means of a tool for its attachment onto the device by using the said thread, the said component also comprising, between the said first and second portions, a deformable intermediate portion (13a), **characterised in that** the said deformable intermediate portion forms a sealing lip intended to be applied tightly against the said wall (30) from the side opposite to the screw nut and to ensure tightness between the two sides of the wall at the level of the said hole.

2. A component according to Claim 1,
**characterised in that** the said lip has a generally truncated shape and widens towards the said wall (30).

3. A component according to Claim 2,
**characterised in that** the said lip has a thickness which decreases from the interior to the exterior.

4. A component according to one of Claims 1 to 3,
**characterised in that** the said shape consists of a protruding male shape (14) having an overall dimension which is slightly less than the internal diameter of the screw nut (40),
**and in that** the said shape (14) has at its top a shape enabling it to guide the screw nut (40) for the purpose of the robot-controlled positioning of the said screw nut on the said threaded rod (11).

5. A component according to Claim 4,
**characterised in that** the top of the said shape (14) is domed.

6. A component according to Claim 4,
**characterised in that** the top of the said shape (14) is pointed.

7. A lighting or signalling device for a motor vehicle, of the type comprising a portion (20) forming a base or housing,
**characterised in that** it comprises at least one component (10) according to one of Claims 1 to 6 mounted on the said portion forming the base or housing.

## Patentansprüche

1. Einbauelement (10) für den Einbau einer Beleuchtungs- oder Signaleinrichtung eines Kraftfahrzeugs an einer ortsfesten Wand (30) des Fahrzeugs, die eine durchgehende Bohrung (31) aufweist, umfassend einen ersten Teil (11), der einen Gewindestift bildet, der in die Bohrung eingesetzt werden und mit einer Mutter (40) zusammenwirken kann, und einen zweiten Teil (12), der sich von einem ersten Ende des Gewindestifts aus erstreckt und zur Befestigung des Elements an der Beleuchtungs- oder Signaleinrichtung dient, wobei der besagte zweite Teil (12) ein Gewinde umfaßt, das im wesentlichen koaxial zum Gewindestift (11) verläuft und mit einem formschlüssigen Gewinde (21) zusammenwirken kann, das an der Einrichtung vorgesehen ist, und wobei am freien zweiten Ende des Gewindestifts ein Formstück (14) vorgesehen ist, das die Drehung des Elements mit Hilfe eines Werkzeugs für seine Befestigung anhand des besagten Gewindes an der Einrichtung ermöglicht, wobei das besagte Element außerdem zwischen dem besagten ersten und zweiten Teil einen verformbaren Zwischenteil (13a) aufweist, **dadurch gekennzeichnet,** daß der besagte verformbare Zwischenteil eine Dichtlippe bildet, die zur dichten Anlage an der besagten Wand (30) auf der der Mutter gegenüberliegenden Seite und zur Abdichtung zwischen den beiden Seiten der Wand in Höhe der besagten Bohrung bestimmt ist.

2. Element nach Anspruch 1 , **dadurch gekennzeichnet,** daß die besagte Dichtlippe eine allgemein kegelstumpfartige Form aufweist und sich in Richtung der besagten Wand (30) erweitert.

3. Element nach Anspruch 2 , **dadurch gekennzeichnet,** daß die besagte Dichtlippe eine Dicke aufweist, die von innen nach außen abnimmt.

4. Element nach einem der Ansprüche 1 bis 3 , **dadurch gekennzeichnet,** daß das besagte Formstück aus einem vorstehenden Steckformstück (14) besteht, das eine Gesamtabmessung aufweist, die etwas kleiner als der Gesamtinnendurchmesser der Mutter (40) ist, und daß das besagte Formstück (14) an seinem Ende eine Form aufweist, mit der es die Mutter (40) im Hinblick auf die robotergestützte Positionierung der besagten Mutter an dem besagten Gewindestift (11) führen kann.

5. Element nach Anspruch 4 , **dadurch gekennzeichnet,** daß das Ende des besagten Formstücks (14) gewölbt ist.

6. Element nach Anspruch 4 , **dadurch gekennzeichnet,** daß das Ende des besagten Formstücks (14) spitz zuläuft.

7. Beleuchtungs- oder Signaleinrichtung eines Kraftfahrzeugs, umfassend einen als Sockel oder Gehäuse ausgebildeten Teil (20), **dadurch gekennzeichnet,** daß es mindestens ein Element (10) nach einem der Ansprüche 1 bis 6 enthält, das an dem als Sockel oder Gehäuse ausgebildeten Teil eingebaut ist.
